Europäisches Patentamt

(19) European Patent Office

Office européen des brevets

(11) Veröffentlichungsnummer: **0 173 812**
**B1**

(12) **EUROPÄISCHE PATENTSCHRIFT**

(45) Veröffentlichungstag der Patentschrift:
31.08.88

(21) Anmeldenummer: **85107857.5**

(22) Anmeldetag: **25.06.85**

(51) Int. Cl.⁴: **C 08 L 55/02,** C 08 L 51/04,
C 08 L 51/00, C 08 L 25/14

(54) **Transparente Formmassen.**

(30) Priorität: **06.07.84 DE 3424894**

(43) Veröffentlichungstag der Anmeldung:
**12.03.86 Patentblatt 86/11**

(45) Bekanntmachung des Hinweises auf die Patenterteilung:
**31.08.88 Patentblatt 88/35**

(84) Benannte Vertragsstaaten:
**DE FR GB IT NL**

(56) Entgegenhaltungen:
**DE-A-2 010 633**
**DE-A-2 613 121**
**US-A-3 463 833**

**Die Akte enthält technische Angaben, die nach
dem Eingang der Anmeldung eingereicht wurden
und die nicht in dieser Patentschrift enthalten sind.**

(73) Patentinhaber: **BAYER AG, Konzernverwaltung RP
Patentabteilung, D-5090 Leverkusen 1 Bayerwerk
(DE)**

(72) Erfinder: **Lindner, Christian, Dr., Riehler Strasse
200, D-5000 Köln 60 (DE)**
Erfinder: **Ott, Karl- Heinz, Dr., Paul- Klee- Strasse
54, D-5090 Leverkusen (DE)**
Erfinder: **Uerdingen, Walter, Dr.,
Humperdinckstrasse 41, D-5090 Leverkusen (DE)**
Erfinder: **Braese, Hans- Eberhard, Dipl.- Ing.,
Käthe- Kollwitz- Strasse 3, D-5000 Köln 71 (DE)**
Erfinder: **Kress, Hans- Jürgen, Dr.,
Scheiblerstrasse 111, D-4150 Krefeld (DE)**

**Beschreibung**

Aus DE-A-2 613 121 sind transparente Formmassen bekannt, die aus Polyvinylchlorid (als Hauptbestandteil) und aus einem Gemisch aus einem thermoplastischen Harz aus 30 - 40 Gew.-Teilen α-Methylstyrol, 52 - 62 Gew.-Teilen Methylmethacrylat und 4 - 14 Gew.-Teilen Acrylnitril sowie einem Pfropfpolymerisat von 40 - 60 Gew.-Teilen einer Mischung aus Styrol (40 - 60 Gew.-Teile), Acrylnitril (0 - 10 Gew.-Teile) und Methylmethacrylat (40 - 50 Gew.-Teile) auf 40 - 60 Gew.-Teile Polybutadien oder Butadien/Styrol-Copolymerisat (als Modifikator) bestehen.

Gegenstand dieser Erfindung sind neue transparente thermoplastische Formmassen, die gleichzeitig hohe Wärmestandfestigkeit und Transparenz besitzen aus

A. 100 - 10 Gew.-% (bezogen auf Formmasse) eines Pfropfprodukts von
95 - 15 Gew.-% (bezogen auf Pfropfprodukt), eines Gemischs von 30 - 40 Gew.-Teilen α-Methylstyrol, 52 - 62 Gew.-Teilen Methylmethacrylat und 4 - 14 Gew.-Teilen Acrylnitril auf
5 - 85 Gew.-% (bezogen auf Pfropfprodukt) eines Kautschuks mit einem Teilchendurchmesser ($d_{50}$) von 50 - 1000 nm aus 0 - 40 Gew.-% einpolymerisiertem Styrol oder Acrylnitril und 100 - 60 Gew.-% Butadien oder $C_1$-$C_6$-Alkylacrylat und

B. 0 - 90 Gew.-% (bezogen auf Formmasse) eines thermoplastischen Polymerisatharzes aus 30 - 40 Gew.-Teilen α-Methylstyrol, 52 - 62 Gew.-Teilen Methylmethacrylat und 4 - 14 Gew.-Teilen Acrylnitril.

Diese Formmassen können für sich alleine verwendet werden. Sie sind aber auch als Zusätze zu Polyvinylchlorid zur Verbesserung von dessen Wärmestandfestigkeit geeignet.

Die erfindungsgemäße Formmasse kann also aus dem Pfropfprodukt alleine bestehen, es kann aber auch Thermoplastharz zugemischt werden. Bevorzugt verwendet man Mischungen aus 20 - 80 Gew.-% Pfropfprodukt und 80 - 20 Gew.-% Thermoplastharz. Werden die erfindungsgemäßen Formmassen als Modifikatoren benutzt, dann ist ihre Menge im allgemeinen 10 - 50 Gew.-%, bezogen auf das zu modifizierende Polyvinylchlorid.

Die Pfropfprodukte sind im allgemeinen Emulsionspfropfprodukte aus Butadien- oder Alkylacrylatkautschuke als Pfropfgrundlage. Diese Pfropfgrundlagen sind hochvernetzt und teilchenförmig. Sie besitzen durchweg Gelgehalte > 60 Gew.-%, vorzugsweise > 75 Gew.-%, und werden im allgemeinen selbst durch Emulsionspolymerisation hergestellt. Die Kautschukteilchen haben mittlere Teilchendurchmesser ($d_{50}$) von 50 - 1000 nm, bevorzugt 80 - 200 nm und insbesondere 80 - 150 nm. Sie stellen Polymerisate von Butadien oder Alkylacrylaten dar, insbesondere aber Copolymerisate mit Styrol oder Acrylnitril. Im allgemeinen haben sie Glasübergangstemperaturen < 10°C. Alkylacrylate in diesem Zusammenhang sind Ester der Acrylsäure mit aliphatischen Alkoholen mit 1 - 8 C-Atomen wie Butylacrylat, Hexylacrylat, Ethylhexylacrylat und Ethylacrylat. Diese Kautschuke können auch in untergeordneten Mengen vernetzende, polyfunktionelle Monomere einpolymerisiert enthalten, beispielsweise Triallylcyanurat, Allylacrylat, Alkylendioldimethacrylat, Polyetherdioldimethacrylat oder Divinylbenzol. Besonders geeignete Kautschuke weisen eine Kern-Mantel-Struktur auf. Besonders bevorzugte Kautschuke bestehen aus 28 - 40 Gew.-% Styrol oder Acrylnitril-Einheiten, 72 - 60 Gew.-% Butadien-Einheiten oder $C_1$-$C_6$-Alkylacrylat-Einheiten, besitzen Gelgehalte größer 85 Gew.-% und mittlere Teilchendurchmesser ($d_{50}$) von 80 - 150 nm.

Auf diese Kautschuke ist ein Gemisch aus 30 - 40 Gew.-Teilen, insbesondere 32 - 37 Gew.-Teilen, α-Methylstyrol, 52 - 62 Gew.-Teilen, insbesondere 53 - 58 Gew.-Teilen, Methylmethacrylat und 4 - 14 Gew.-Teilen, insbesondere 8 - 12 Gew.-Teilen, Acrylnitril aufpolymerisiert. Die Pfropfprodukte können durch radikalische Polymerisation einer Emulsion der Monomeren in Anwesenheit der Kautschuklatices in an sich bekannten weise hergestellt werden. Bei dieser Pfropfpolymerisation entsteht neben dem eigentlichen Pfropfpolymerisat auch noch freies Harz. Mit Pfropfprodukt ist das Material bezeichnet, das bei der Pfropfpolymerisation entsteht. Es handelt sich also in den meisten Fällen um ein Gemisch aus eigentlichem Pfropfpolymerisat und daneben angefallenem freien Harz.

Polymerisatharze im Sinne der Erfindung sind durch Emulsionspolymerisation in an sich bekannter Weise erhaltene Terpolymere aus 30 - 40, insbesondere 32 - 37 Gew.Teilen, α-Methylstyrol, 52 - 62, insbesondere 53 - 58 Gew.-Teilen, Methylmethacrylat und 4 - 14, insbesondere 8 - 12 Gew.Teilen, Acrylnitril. Sie besitzen durchweg Staudiger-Indices, gemessen in Dimethylformamid bei 20°C, von größer als 0,3, insbesondere im Bereich 0,35 - 0,8 dl/g.

Sowohl die Pfropfprodukte als auch die Polymerisatharze können durch alkalische, radikalische Emulsionspolymerisation bei pH-Werten von > 8, insbesondere 8,5 - 12, hergestellt werden. Als Initiatoren können wasserlösliche, anorganische Peroxiverbindungen eingesetzt werden, z. B. Kalium- und Natriumperoxidisulfat, Kalium- und Natriumperoxidiphosphat. Der Einsatz von Reduktionsmitteln erweist sich als ungünstig, da so erhaltene Produkte geringere Zähigkeit oder Thermostabilität besitzen. Zur Emulsionspolymerisation kann man als Emulgatoren Natrium- oder Kaliumsalze von organischen Carbonsäuren verwenden. Sulfonate als Emulgatoren sind im allgemeinen weniger günstig. Besonders bevorzugte Emulgatoren sind Salze von Harzsäuren, Ölsäure und Stearinsäure. Besonders bevorzugt ist die Pfropfpolymerisation in Gegenwart anorganischer Initiatoren und regelnder Mercaptane z. B. Dodecylmercaptan.

Bei der Polymerisation fallen die Pfropfprodukte und die Polymerisatharze als Latices an, meist mit Feststoffgehalten von 20 - 60 Gew.-%. Wenn man Mischungen aus Pfropfprodukten und Polymerisatharzen herstellen will, kann man die Latices mischen und gemeinsam in üblicher Weise, z. B. mit anorganischen oder organischen Säuren, wie Essigsäure, Ameisensäure, Salzsäure, Schwefelsäure, Phosphorsäure oder mit wasserlöslichen, anorganischen oder organischen Salzen wie Natriumchlorid, Magnesiumsulfat, Calciumsulfat, Aluminiumsulfat, Calciumformiat oder Natriumacetat koagulieren. Die koagulierten Feststoffe können dann in üblicher Weise isoliert und getrocknet werden. Vor oder nach der Aufarbeitung können die für thermoplastische Formmassen üblichen Zusätze wie Stabilisatoren, Gleitmittel, Pigmente, Antistatika, zugesetzt werden.

**Beispiele:**

1.Eingesetzte Polymerisate (Harztypen)

1.1 PVC-Masse - Polymerisat (Vestolit ® M6867 der Chem. Werke Hüls), K-Werte des PVC = 68

1.2 Terpolymerisat-Harze im Sinne der Erfindung aus 34,5 Gew.-% α-Methylstyrol, 55,5 Gew.-% Methylmethacrylat und 10 Gew.-% Acrylnitril mit einem Staudinger-Index [μ] (gemessen in DMF bei 20°C) von 0,4 dl/g:
In einem Reaktor werden bei 80°C unter Rühren vorgelegt:

| 3360 | Gew.-Tl | Wasser |
| 10 | Gew.-Tl | Na-Salz der disproportionierten Abietinsäure |
| 6 | Gew.-Tl. | 1n-Natronlauge |

Anschließend gibt man folgende Monomermischung hinzu:

| 69 | Gew.-Tl. | α-Methylstyrol |
| 111 | Gew.-Tl | Methylmethacrylat |
| 20 | Gew.-Tl | Acrylnitril |
| 0,7 | Gew.-Tl. | tert.-Dodecylmercaptan |

Die Polymerisation wird durch Zugabe von 9 Gew.-Tl Kaliumperoxidsulfat, gelöst in 300 Gew.-Tl. Wasser, initiiert.
Anschließend werden folgende Lösungen innerhalb von 6 Std. bei 75°C gleichmäßig in den Reaktor eingespeist:

| Lösung 1: | 1765 | Gew.-Tl. | Wasser |
| | 60 | Gew.-Tl. | Na-Salz der disproportionierten Abietinsäure |
| | 36 | Gew.-Tl. | 1n-Natronlauge |
| Lösung 2: | 900 | Gew.-Tl. | α-Methylstyrol |
| | 1443 | Gew.-Tl. | Methylmethacrylat |
| | 200 | Gew.-Tl. | Acrylnitril |
| | 7,2 | Gew.-Tl. | tert.-Dodecylmercaptan |

Anschließend wird bei 80°C in 4 Std. auspolymerisisert. Der gebildete Latex besitzt einen Polymerfeststoff von 33 Gew.-%, einen pH-Wert von 10. Nach Stabilisierung mit phenolischem Antioxidanz wird der Latex mittels einer Mischung aus Magnesiumsulfat und Essigsäure bei pH-Werten von 4 - 5 und Temperaturen von 90 - 100°C koaguliert und anschließend zu einem Harzpulver getrocknet.

1.3 Copolymerisat-Harz (Vergleich) aus 31 Gew.-% Acrylnitril und 69 Gew.-% α-Methylstyrol. Mit einem Staudinger-Index [μ] (gemessen in DMF bei 20°C) von 0,43 dl/g, hergestellt durch Emulsionspolymerisation.

2. Eingesetzte Pfropfpolymerisate im Sinne der Erfindung:
Als Pfropfbasis wird ein SBR-Kautschuklatex, enthaltend ein Copolymerisat, 35 Gew.-% Styrol und 65 Gew.-%- Butadien, eingesesetzt. Der Latex besitzt einen Polymerfeststoffgehalt von 32,4 Gew.-%, eine mittlere Latexteilchengröße ($d_{50}$-Wert von 120 nm; das Copolymer besitzt einen Gelgehalt von 88 Gew.-%. Der Latex wurde durch radikalische Emulsionspolymerisation bei 60°C mit Kaliumperoxidisulfat als Initiator und Na-Salz disproportinierter Abietinsäure bei pH-Werten von 11 - 12 hergestellt.
Pfropfpolymerisate werden nach folgender Tabelle hergestellt.

3

**Tabelle 1**

| Produkt | | 2.1 | 2.2 | 2.3 | 2.4 | 2.5 |
|---|---|---|---|---|---|---|
| Lsg. 1: | SBR-Latex | 862 | 1723 | 1723 | 3125 | 4375 |
| | Wasser | 2000 | 1140 | 1140 | 1255 | 200 |
| Lsg. 2: | Kaliumperoxidisulfat | 10 | 10 | 10 | 4 | 4 |
| | Wasser | 300 | 300 | 300 | 100 | 100 |
| Lsg. 3 | α-Methylstyrol | 869 | 113 | 773 | 345 | 276 |
| | Methylmethacrylat | 1399 | 1243 | 1243 | 555 | 444 |
| | Acrylnitril | 252 | 224 | 224 | 100 | 80 |
| | tert. -Dodecylmercaptan | - | - | 3 | - | - |
| Lsg. 4: | Wasser | 3000 | 3000 | 3000 | 1000 | 1000 |
| | Na-Salz disproportionierter Abietinsäure | 50 | 45 | 45 | 36 | 20 |
| | 1n-Natronlauge | 42 | 40 | 40 | 30 | 12 |

Angaben in Gew.-Teilen

In einem Reaktor werden vorgelegt die Lösung 1; nach Aufheizen auf 75°C und nach Initiierung mittels Lösung 2 werden die Lösungen 3 und 4 innerhalb von 5 Std. zudosiert. Anschließend wird bei 75°C 4 Std. nachpolymerisiert. Nach Abkühlung auf 20°C stabilisiert man die Latices mit 1,2 Gew.-% phenolischen Antioxidanzien, bezogen auf 100 Teile Pfropfpolymerisat. Aus dem Latex wird mittels Mischung aus Essigsäure und Mg-Sulfat das jeweilige Pfropfpolymerisat 2.1 bis 2.5 isoliert, gut gewaschen und zu einem Pulver getrocknet.

Die Pfropfpolymerisate besitzen unterschiedliche Kautschukgehalte:

Produkt 2.1 besitzt 10 Gew.-% Kautschuk (SBR)
Produkt 2.2 besitzt 20 Gew.-% Kautschuk (SBR)
Produkt 2.3 besitzt 20 Gew.-% Kautschuk (SBR)
Produkt 2.4 besitzt 50 Gew.-% Kautschuk (SBR)
Produkt 2.5 besitzt 70 Gew.-% Kautschuk (SBR)

### 3. Vergleichspfropfpolymerisate

3.1 ABS-Polymerisatpulver aus 50 Gew. -% vernetzten Polybutadien (einer mittleren Teilchengröße von 400 nm) und 50 Gew.-% SAN einer Zusammensetzung: 72 Tl. Styrol und 28 Tl. Acrylnitril.

3.2 ABS-Polymerisatpulver aus 70 Gew.-% Polybutadien analog 3.1 und 30 Gew.-% SAN einer Zusammensetzung analog 3.1.

3.3 Polymerisatpulver aus 13 Gew.-% ABS des Typs 3.1 und 87 Gew.-% eines Copolymerharzes aus 69 Gew.-% α-Methylstyrol und 31 Gew.-% Acrylnitril mit einem Staudinger-Latex $[\mu]$ (gemessen in DMF bei 20°C) von 0,55 dl/g.

3.4 Polymerisat aus 23 Gew.-% ABS des Typs 3.1 und 77 Gew.-% Copolymerharz des Typs gemäß 1.3.

3.5 Pfropfpolymerisatpulver, enthaltend als Kautschukbasis ein Copolymerisat aus 70 Gew.-% Butadien, 20 Gew.-% Styrol und 10 Gew.-% Acrylnitril. Mittlerer Teilchendurchmesser ($d_{50}$-Wert) 80 nm, und bestehend aus 70 Gew.-Tl. dieses Kautschuks und 30 Gew.-Tl. einer Harzkomponente aus 52 Gew.-% Styrol und 48 Gew.-% Methylmethacrylat.

Die Polymerisate 3.1 bis 3.5 sind bekannt. Ihre Herstellung erfolgt über Emulsionspfropfpolymerisation.

### 4. Die Herstellung von Thermoplastformkörpern aus den Pulvern (bzw. deren Gemischen) 1 bis 3

Die Pulver werden in den angegebenen Mischungsverhältnissen unter Einsatz von üblichen Gleitmitteln (0,2 Tl. Loxiol® G 70) und gegebenenfalls PVC-Stabilisator (1,5 Tl. Irgastab® 17 M) auf einer Walze bei 185°C (innerhalb von 10 Min.) compoundiert. Aus dem Compound werden danach Prüfformkörper sowie Platten (einer Dicke von 4 mm) durch Pressen bei 190°C innerhalb von 10 min. hergestellt.

### 5. Eigenschaftsvergleiche

0 173 812

### 5.1 Tabelle 2a

| Compound (jeweils 100 Tl.) | 2.1 | 2.2 | 2.3 | 3.3 |
|---|---|---|---|---|
| Kugeldruckhärte (M Pa 30'') | 125 | 98 | 95 | 94 |
| Schlagzähigkeit (kJ/m$^2$) | 21 | 52 | 65 | 60 |
| Kerbschlagzähigkeit (kJ/m$^2$) | 3 | 7,5 | 8,5 | 8,5 |
| Formbeständigkeit Vicat B(°C) | 115 | 110 | 110 | 105 |
| Trübung (%) | 11 | 9 | 11 | 96 |

Wie aus Tabelle 2a hervorgeht, zeichnen sich die erfindungsgemäßen Pfropfpolymerisate durch ein hohes mechanisches Niveau aus; zusätzlich sind die Formmassen 2.1, 2.2 und 2.3 hochtransparent im Vergleich zu einem Standardmaterial 3.3. Außerdem ist zu sehen, daß 2.3 ein verbessertes mechanisches Zähigkeitsniveau besitzt, dieses ist überraschenderweise auf die Pfropfung der Monomeren in Gegenwart eines Mercaptans zurückzuführen.

### Tabelle 2b

| | 1 | 2 | 3 | 4 |
|---|---|---|---|---|
| Compound aus | 40 Tl. 2.4 | 40 Tl. 2.4 | 40 Tl. 3.1 | 40 Tl. 3.1 |
| (Gew.-Tl) | 60 Tl. 1.2 | 60 Tl.1.3 | 60 Tl. 1.2 | 60 Tl. 1.3 |
| Schlagzähigkeit (kJ/m$^2$) | 95 | 78 | 83 | 89 |
| Kerbschlagzähigkeit (kJ/m$^2$) | 13 | 12 | 11 | 12 |
| Formbeständigkeit Vicat B (°C) | 103 | 99 | 98 | 98 |
| Trübung (%) | 11 | 92 | 97 | 98 |

Wie aus Tabelle 2b hervorgeht, zeichnen sich erfindungsgemäße Harz/Pfropfprodukt-Mischungen 1 durch besonders gute mechanische Eigenschaften und zugleich hohe Transparenz aus, obwohl das von Mischungen 2 - 4 (Vergleichscompounds) nicht zu erwarten gewesen wäre.

### 5.2 PVC-haltige Formmassen

In nachfolgenden Tabellen wird die besondere Eignung der erfindungsgemäßen Kompositionen bzw. Pfropfprodukte als Komponenten in PVC-Formmassen demonstriert:

### Tabelle 3

| | 5.2.1 | 5.2.2 | 5.2.3 | 5.2.4 | 5.2.5 | 5.2.6 | 5.2.7 |
|---|---|---|---|---|---|---|---|
| Compound | 1.1 (100) | 1.1 (90) | 1.1 (90) | 1.1(92,5) | 1.1(87,5) | 1.1(92,5) | 1.1(87,5) |
| Angaben in Gew.-Tl. | | 2.4 (10) | 3.1 (10) | 2.5 (7,5) | 2.5 (12,5) | 3.2 (7,5) | 3.2 (12,5) |
| Kugeldruckhärte (M Pa 30'') | 121 | 108 | 105 | 139 | 96 | 94 | 85 |
| Schlagzähigkeit (kJ/m$^2$) | - | - | - | - | - | - | - |
| Kerbschlagzähigkeit (kJ/m$^2$) | 2 | 5,5 | 6,0 | 5,5 | 35 | 10 | 40 |
| Wärmeformbestämdigkeit Vicat B (°C) | 83 | 83 | 81 | 83 | 82 | 80 | 79 |
| Trübung (%) | 11 | 10 | 64 | 9 | 9 | 96 | 98 |

Die erfindungsgemäßen Fornmassen 5.2.2, 5.2.4, 5.2.5 besitzen im Vergleich zu bekanten Compounds neben der sehr hohen optischen Transparenz auch verbesserte Härte/Wärmeformbeständigkeitsreaktionen bei praxisrelevanten vernünftigen Zähigkeitswerten.

5

**Tabelle 4**

| Compound | 5.2.8 | 5.2.9 | 5.2.10 | 5.2.11 | 5.2.12 | 5.2.13 | 5.2.14 | 5.2.15 |
|---|---|---|---|---|---|---|---|---|
| | 1.1(60) | 1.1(60) | 1.1(60) | 1.1(60) | 1.1(60) | 1.1 (60) | 1.1 (60) | 1.1 (60) |
| | | | | | | 1.2(28,6) | 1.2(28,6) | 1.3(28,6) |
| Angaben in Gew.-Tl. | 2.1(40) | 2.2(40) | 2.3(40) | 3.3(40) | 3.4(40) | 3.5(11.4) | 2.5(11.4) | 2.5(11.4) |
| Kugeldruckhärte (M Pa 30″) | 116 | 110 | 110 | 116 | 109 | 115 | 115 | 115 |
| Schlagzähigkeit (kJ/m²) | n.g. | n.g. | n.g. | 90 | n.g. | n.g. | n.g. | n.g. |
| Kerbschlagzähigkeit (kJ/m²) | 3 | 6 | 7 | 2.8 | 4.5 | 6 | 8 | 8 |
| Wärmeformbeständigkeit Vicat B (°C) | 94 | 94 | 94 | 92 | 89 | 90 | 94 | 93 |
| Trübung (%) | 12 | 10 | 11 | - | - | 12 | 11 | 70 |
| Lichttransmissionsgrad (%) | 66 | 69 | 69 | 30 | 23 | 68 | 67 | 23 |

n.g. = nicht gebrochen

Neben der hervorragenden Transparenz der Formkörper besitzen die erfindungsgemäßen Massen 5.2.8 bis 5.2.10 höhere Wärmeformbeständigkeiten (trotz höherer Kautschukgehalte), bessere Zähigkeiten und höhere Härten. Der Vergleich 5.2.13 mit 5.2.14 zeigt weiterhin, daß bei Einsatz herkömmlicher transparenter Pfropfkautschuke 3.5 zwar auch transparente Formmassen herstellbar sind, das mechanische Niveau der erfindungsgemäßen Formmassen ist allerdings verbessert. Bei Einsatz des bekannten Harzes 1.3 werden zwar auch besondere Formmassen hoher Wärmeformbeständigkeit gebildet, die Formkörper sind aber opak.

**Anhang zu im Text verwendeten Meßmethoden**

- $d_{50}$ - Werte sind mittlere Teilchendurchmesser, ermittelt durch Ultrazentrifugenmessung, siehe dazu: W. Scholtan et al. Colloids Z. Polymere, 250 (1972), S. 783 - 796.
- Zur Definition des Staudinger - Index siehe "Polymeranalytik I und II", M. Hoffman et al. Georg-Thieme-Verlag, Stuttgart, 1977.

- Kugeldruckshärte,            bestimmt nach DIN 53456
- Schlagzähigkeit,             bestimmt nach DIN 53453
- Kerbschlagzähigkeit,         bestimmt nach DIN 53453
- Wärmeformbeständigkeit,      bestimmt nach DIN 53460
- Trübung,                     bestimmt nach DIN 5036
- Lichttransmissionsgrad,      bestimmt nach DIN 5036

**Patentansprüche**

1. Transparente thermoplastische Formmassen aus

A. 100 - 10 Gew.-% (bezogen auf Formmasse) eines Pfropfproduktes von

95 - 15 Gew.-% (bezogen auf Pfropfprodukt) eines Gemischs von 30 - 40 Gew.-Teilen α-Methylstyrol, 52 - 62 Gew.-Teilen Methylmethacrylat und 4 - 14 Gew.-Teilen Acrylnitril auf

5 - 85 Gew.-% (bezogen auf Pfropfprodukt eines Kautschuks mit einem Teilchendurchmesser ($d_{50}$) von 50 - 1000 nm aus 0 - 40 Gew.-% einpolymerisiertem Styrol oder Acrylnitril und 100 - 60 Gew.-% einpolymerisiertem Butadien oder $C_1$-$C_6$-Alkylacrylat und

B. 0 - 90 Gew.-% (bezogen auf Formmasse) eines thermoplastischen Polymerisatharzes aus
30 - 40 Gew.-Teilen α-Methylstyrol,

52 - 62 Gew.-Teilen Methylmethacrylat und

4 - 14 Gew.-Teilen Acrylnitril.

2. Formmassen gemäß Anspruch 1, dadurch gekennzeichnet, daß dem Pfropfprodukt A ein Kautschuk aus 28 - 40 Gew.-% einpolymerisiertem Styrol oder Acrylnitril und 72 - 60 Gew.-% einpolymerisiertem Butadien oder $C_1$-$C_6$-Alkylacrylat zugrunde liegt.

**Claims**

1. Transparent thermoplastic moulding compositions consisting of

A. 100 - 10 % by weight (based on the moulding composition) of a graft product of

95 - 15 % by weight (based on the graft product) of a mixture of 30 - 40 parts by weight of $\alpha$-methylstyrene,

52 - 62 parts by weight of methyl methacrylate and 4 - 14 parts by weight of acrylonitrile on

5 - 85 % by weight (based on the graft product of a rubber with a particle diameter ($d_{50}$) of 50 - 1000 nm consisting of 0 - 40 % by weight of copolymerised styrene or acrylonitrile and 100 - 60 % by weight of copolymerised butadiene or $C_1$-$C_6$-alkylacrylate and

0 - 90 % by weight (based on the moulding composition) of a thermoplastic polymer resin of

30 - 40 parts by weight of $\alpha$-methylstyrene,

52 - 62 parts by weight of methyl methacrylate and

4 - 14 parts by weight of acrylonitrile.

2. Moulding compositions according to Claim 1, characterised in that the graft product A is based on a rubber consisting of 28 - 40 % by weight of copolymerised styrene or acrylonitrile and 72 - 60 % by weight of copolymerised butadiene or $C_1$-$C_6$-alkylacrylate.


**Revendications**

1. Matières à mouler thermoplastiques transparentes réalisées à partir de

A. 100 à 10 % en poids (par rapport à la matière à mouler) d'un produit de greffage de

95 à 15 % en poids (par rapport au produit de greffage) d'un mélange de 30 à 40 parties en poids d'$\alpha$-méthylstyrène, de 52 à 62 parties en poids de méthacrylate de méthyle et de 4 à 14 parties en poids d'acrylonitrile sur

5 à 85 % en poids (par rapport au produit de greffage) d'un caoutchouc avec un diamètre de particule ($d_{50}$) de 50 à 1000 nm obtenu à partir de 0 à 40 % en poids de styrène ou d'acrylonitrile incorporé par polymérisation et de 100 à 60 % en poids de butadiène ou d'un acrylate d'alkyle en $C_1$ à $C_6$ incorporé par polymérisation et

B. 0 à 90 % en poids (par rapport à la matière à mouler) d'une résine polymère thermoplastique réalisée à partir de 30 à 40 parties en poids d'$\alpha$-méthylstyrène,

de 52 à 62 parties en poids de méthacrylate de méthyle

et de 4 à 14 parties en poids d'acrylonitrile.

2. Matières à mouler selon la revendication 1, caractérisées en ce que le produit de greffage A est base d'un caoutchouc constitué de 28 à 40 % en poids de styrène ou d'acrylonitrile incorporé par polymérisation et de 72 a 60 % en poids de butadiène ou d'un acrylate d'alkyle en $C_1$-$C_6$ incorporé par polymérisation.